# EUROPEAN PATENT APPLICATION

(11) **EP 3 661 171 A1**
(43) Date of publication of application: **03.06.2020**
(21) Application number: 18930518.8
(22) Date of filing: 11.09.2018
(51) Int. Cl.: H04M 1/02, H01Q 1/24

(54) **MOBILE TERMINAL**

(71) Applicant: LG Electronics Inc., Seoul 07336 (KR)
(72) Inventor: KIM, Duckyun, Seoul 06772 (KR); KWON, Youngbae, Seoul 06772 (KR); KIM, Dongjin, Seoul 06772 (KR); JEON, Byungeun, Seoul 06772 (KR)
(74) Representative: Vossius & Partner Patentanwälte Rechtsanwälte mbB
(86) International application number: PCT/KR2018/010612
(87) International publication number: WO 2020/054883

(57) **Abstract**

Disclosed is a foldable mobile terminal to address, through a side frame, an antenna radiation-related issue that may occur when the terminal is folded. The terminal is composed of a first body and a second body foldable with respect to each other and includes a side frame defining a side appearance of the mobile terminal in an unfolded position, a plurality of slits formed in the side frame, the slits partitioning the side frame into a plurality of segmented sections, and a power supply configured to supply power to at least one first segmented section of the plurality of segmented sections, wherein, based on a folded position of the first body and the second body, a second segmented section facing the first segmented section has the same length as a length of the first segmented section by the slits.

## Description

### [Technical Field]

The present disclosure relates to an antenna structure applied to a foldable mobile terminal.

### [Background Art]

A mobile terminal may have an antenna that performs various functions.

Structures for implementing multiple antennas while having a sufficient radiation capability have been developed.

There is a mobile terminal that has a side metal frame provided with a plurality of insulation strips or slits in order to implement an antenna. The length of the side metal frame serving as a radiator may be adjusted based on intervals of the insulation strips.

With development of flexible displays, needs for foldable mobile terminals with foldable displays have been realized.

Such a foldable mobile terminal may also implement an antenna through the above-described side metal frame.

However, when multiple segmented regions of the side metal frame serve as multiple antennas, folding the foldable mobile terminal may cause the regions of the metal frame to overlap each other, thereby obstructing the originally intended radiation function.

### [Disclosure]

### [Technical Problem]

An object of the present disclosure is to address the aforementioned issue related to antenna radiation problem through a side frame that may be raised when a foldable mobile terminal is folded.

### [Technical Solution]

The above and other objects of the present disclosure can be achieved by providing a foldable mobile terminal composed of a first body and a second body foldable with respect to each other, the mobile terminal including a side frame defining a side appearance of the mobile terminal in an unfolded position, a plurality of slits formed in the side frame, the slits partitioning the side frame into a plurality of segmented sections, and a power supply configured to supply power to at least one first segmented section of the plurality of segmented sections, wherein, based on a folded position of the first body and the second body, a second segmented section facing the first segmented section has the same length as a length of the first segmented section by the slits.

According to another embodiment, the power supply may supply power to the first segmented section and block power from being supplied to the second segmented section.

According to another embodiment, the first segmented section may be provided to only one of the first body or the second body.

According to another embodiment, the first segmented section may include a plurality of first segmented sections, wherein at least one of the first segmented sections may be provided to each of the first body and the second body.

According to another embodiment, the first segmented section may be supplied with power by the power supply, and the second segmented section may be grounded and provided with a parasitic element.

According to another embodiment, the second segmented section may be connected to the power supply.

Herein, the mobile terminal may further include a switch configured to cause the power supply to supply power to the second segmented section in the unfolded position and to prevent the power supply from supplying power to the second segmented section in the folded position.

According to another embodiment, the mobile terminal may further include a conductive display plate overlapping the display;

a hinge member comprising a conductive area, the hinge member connecting the first body and the second body to implement the folding or unfolding, and a hinge member antenna forming a radiation pattern provided in an open area of the conductive area of the hinge member, the open area not overlapping with the display plate in the folded position, wherein the switch may cause the power supply to supply power to the second segmented section in the unfolded position, and cause the power supply to supply power to the hinge member antenna in the folded position.

According to another embodiment, the conductive area of the hinge member may form an overlapping area when the mobile terminal is in the folded position, wherein the radiation pattern of the hinge member antenna may be formed to overlap the overlapping area.

According to another embodiment, the radiation pattern may be an open slot formed over an outer boundary of the hinge member.

According to another embodiment, the radiation pattern may be a closed slot formed in an inner area of the hinge member.

According to another embodiment, the power supply may be implemented based on one of a direct power supply scheme or a coupling power supply scheme.

According to another embodiment, the first segmented section may be implemented as at least one of a monopole antenna, a planar inverted-F antenna (PIFA), a loop antenna, or an open slot antenna.

### [Advantageous Effects]

A mobile terminal according to the present disclosure may have the following effect.

According to at least one of the embodiments of the present disclosure, sufficient antenna radiation performance may be secured in both unfolded and folded positions of a foldable mobile terminal.

Further scope of applicability of the present disclosure will become apparent from the detailed description given hereinafter. However, it should be understood that the detailed description and specific examples, while indicating preferred embodiments of the disclosure, are given by illustration only, since various changes and modifications within the spirit and scope of the disclosure will become apparent to those skilled in the art from this detailed description.

### [Description of Drawings]

FIG. 1A is a block diagram of a mobile terminal in accordance with the present disclosure.
FIGS. 1B and 1C are conceptual views of one example of the mobile terminal, viewed from different directions;
FIG. 2(a) is a conceptual view of an unfolded position of the mobile terminal in accordance with the present disclosure, and FIG. 2(b) shows a form of a folded position thereof.
FIG. 3 is a conceptual view of the mobile terminal in a folded position in accordance with the present disclosure.
FIG. 4 illustrates an embodiment of the mobile terminal in accordance with the present disclosure.
FIG. 5 illustrates an embodiment of the mobile terminal in accordance with the present disclosure.
FIGS. 6 and 7 illustrate two types of power supply schemes for an antenna of the mobile terminal in accordance with the present disclosure.
FIGS. 8 to 11 illustrate four configurations according to antenna types of the mobile terminal in accordance with the present disclosure.
FIG. 12(a shows an unfolded position of an embodiment of a mobile terminal in accordance with the present disclosure, and FIG. 12(b) shows a folded position thereof.
FIG. 13 illustrates an embodiment of the mobile terminal in accordance with the present disclosure.
FIG. 14 illustrates another embodiment of the mobile terminal in accordance with the present disclosure.
FIG. 15 illustrates an embodiment of the mobile terminal in a folded position in accordance with the present disclosure.
FIG. 16 illustrates another embodiment of the mobile terminal in a folded position in accordance with the present disclosure.
FIG. 17 illustrates one embodiment of the mobile terminal in a folded position in accordance with the present disclosure.
FIG. 18 illustrates another embodiment of the mobile terminal in accordance with the present disclosure.
FIG. 19 illustrates another embodiment of the mobile terminal in accordance with the present disclosure.
FIG. 20 illustrates another embodiment of the mobile terminal in accordance with the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

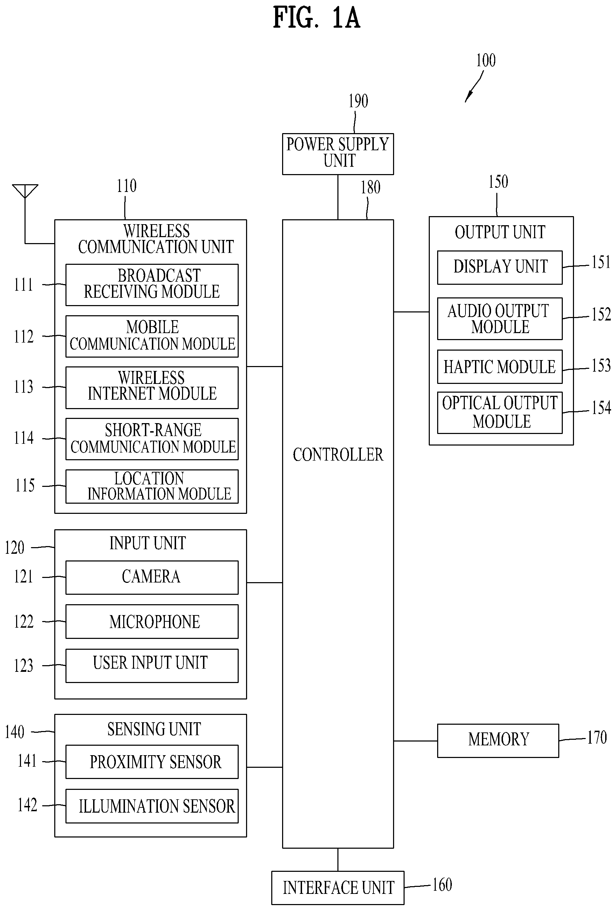

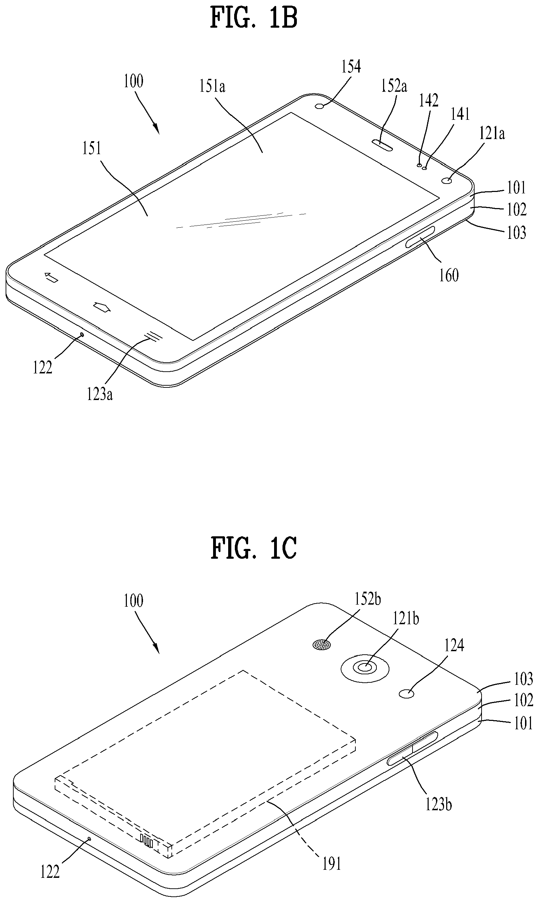

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. Referring now to FIG. 1A, the mobile terminal 100 is shown having wireless communication unit 110 configured with several commonly implemented components. It is understood that implementing all of the illustrated components is not a requirement, and that greater or fewer components may alternatively be implemented.

More specifically, the wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example,, the sensing unit 140 may alternatively or additionally include other types of sensors or devices, such as a proximity sensor 141 and an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output, or activating application programs stored in the memory 170.

To drive the application programs stored in the memory 170, the controller 180 may be implemented to control a predetermined number of the components mentioned above in reference with FIG. 1A. Moreover, the controller 180 may be implemented to combinedly operate two or more of the components provided in the mobile terminal 100 to drive the application programs.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Some or more of the components may be operated cooperatively to embody an operation, control or a control method of the mobile terminal in accordance with embodiments of the present disclosure. Also, the operation, control or control method of the mobile terminal may be realized on the mobile terminal by driving of one or more application problems stored in the memory 170.

1B and 1C illustrate basic features of a foldable mobile terminal in an expanded state.

Here, the terminal body may be understood to refer to the concept of this bore a mobile terminal (100) to at least one of the aggregate.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include the display unit 151, the first and second audio output modules 152a and 152b, the proximity sensor 141, the illuminance sensor 142, the optical output module 154, the first and second cameras 121a and 121b, the first and second manipulation units 123a and 123b, the microphone 122 and the interface unit 160.

It will be described for the mobile terminal as shown in FIGS. 1B and 1C. The display unit 151, the first audio output module 152a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 152b and the second camera 121b are arranged in rear surface of the terminal body.

It is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

A flash 124 is shown located adjacent to the second camera 121b. When an image of a subject is captured with the camera 121b, the flash 124 may illuminate the subject.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (see FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

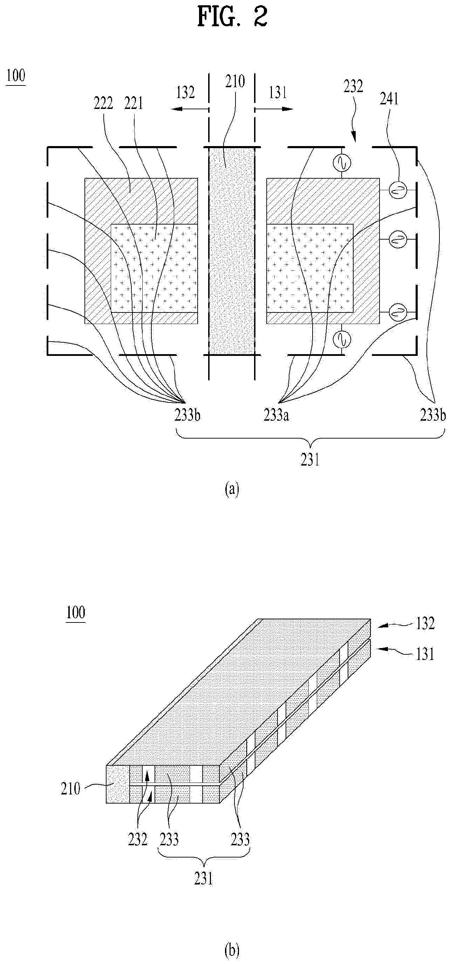

FIG. 2(a) is a conceptual view of an unfolded position of the mobile terminal 100 in accordance with the present disclosure, and FIG. 2(b) shows a form of a folded position thereof.

As described above, the features of the present disclosure are applied to the foldable mobile terminal 100. The mobile terminal 100 includes a first body 131 and a second body 132 which are foldable with respect to each other. The mobile terminal 100 in the unfolded position may have a bar shape with side edge of the first body 131 and the second body 132 adjacent to each other at one side as shown in FIG. 2(a). When the mobile terminal 100 is in the folded position, the first body 131 and the second body 132 may be arranged in a stacked manner as shown in FIG. 2(b). The first body 131 and the second body 132 may be connected by a hinge member 210 to implement folding or unfolding of the first body 131 and the second body 132.

When the mobile terminal 100 is in the unfolded position, a side frame 231 may be arranged between the display and the rear cover to define a side appearance area of the mobile terminal 100.

When the display provided on the inner side of the mobile terminal 100 and the rear cover provided on the outer side are formed of non-conductive members, and the side frame 231 is formed of a conductive member, one area of the side frame 231 may serve as an antenna.

In order to properly serve as an antenna, the side frame 231 has a section 233 segmented by a slit 232. The length of the segmented section 233 of the side frame 231 is adjusted by the slit 232 because the segmented section 233 serves as a radiator and the length of the radiator affects an antenna frequency range.

A middle frame may be provided between the display and the rear cover inside the mobile terminal 100 to support a main printed circuit board and the like. The middle frame may be integrated with the side frame 231. That is, the side frame 231 may be arranged outside the middle frame.

The side frame 231 is divided into a plurality of segmented sections 233 by multiple slits 232. The multiple slits 232 may be provided as empty spaces, or may be filled with a non-conductive member to form the same plane as the side frame 231 to promote unity of the side appearance. The slits 232 of the non-conductive member may be formed in the side frame 231 through double injection.

In the side frame 231, all the segmented sections 233 may be formed of a metal material. Alternatively, only segmented sections 233 performing an antenna function may be formed of a metallic material, and the remaining segmented sections 233 may be formed of either a metallic material or a nonmetallic material.

The segmented sections 233 performing the antenna function may be supplied with power from a power supply 241. A segmented section 233 connected to the power supply 241 is defined as a first segmented section 2331.

A second segmented section 233b refers to a segmented section 233 arranged adjacent to the first segmented section 233a among the multiple segmented sections 233 in the folded position of the mobile terminal 100.

However, as the second segmented section 233b comes into contact with the first segmented section 233a, antenna performance may be degraded when the first segmented section 233 a serves as an antenna.

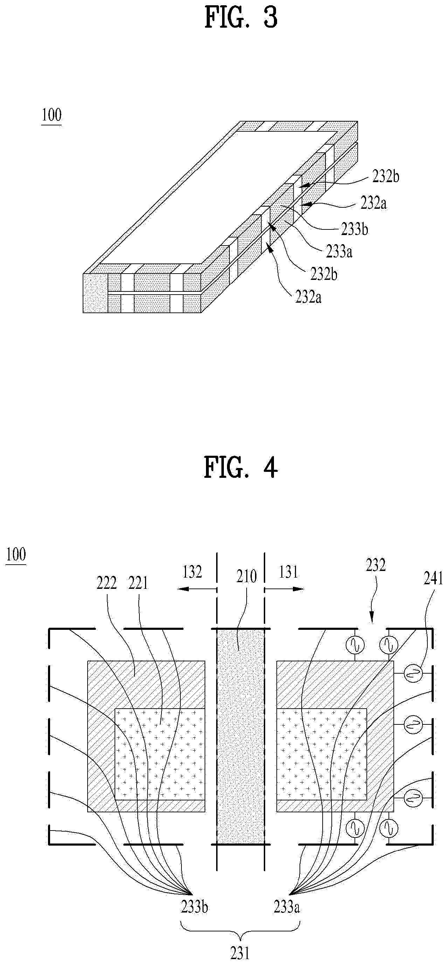

FIG. 3 is a conceptual view of the mobile terminal 100 in a folded position in accordance with the present disclosure.

In order to address aforementioned issue, the first segmented section 233a and the second segmented section 233b facing each other when the mobile terminal is in the folded position may be formed to have the same length by the slit 232. More specifically, first slits 232a provided on both sides of the first segmented section 233a and second slits 232b provided on both sides of the second segmented section 233b may be arranged on the same line.

FIG. 4 illustrates an embodiment of the mobile terminal 100 in accordance with the present disclosure.

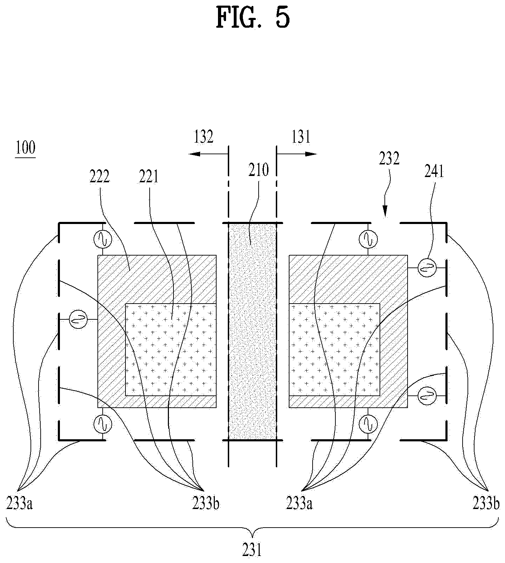

FIGS. 4 and 5 relate to implementation of multiple antennas in the foldable mobile terminal 100.

Basically, when the first segmented section 233a of the first segmented section 233a and the second segmented section 233b facing each other is connected to the power supply 241 and is supplied with power, the second segmented section 233b is not connected to the power supply 241. This is when both segmented sections 233a and 233b are connected to the power supply 241 and supplied with power, radiation performance may be degraded.

Specifically, embodiments of the segmented sections may be divided into FIGS. 4 and 5.

FIG. 4 illustrates a mobile terminal 100 provided with a first segmented section 233a on only one side of the first body 131 or the second body 132. FIG. 5 illustrates a mobile terminal 100 provided with at least one first segmented section 233a on the first body 131 and the second body 132.

As described above, in order to supply power to only the first segmented section 233a between the first segmented section 233a and the second segmented section 233b facing each other in the folded position of the mobile terminal 100, the mobile terminal 100 may be implemented as shown in FIG. 4 or FIG. 5.

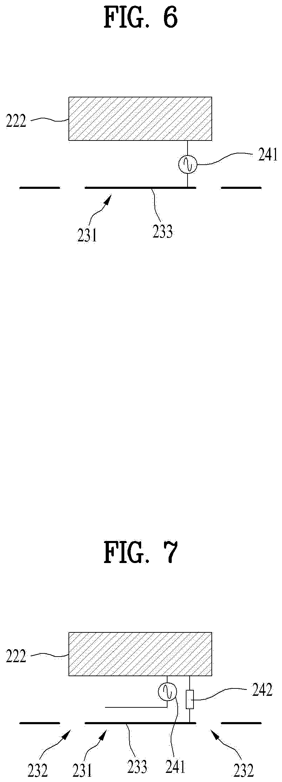

FIGS. 6 and 7 illustrate two types of power supply schemes for an antenna of the mobile terminal 100 in accordance with the present disclosure.

The antenna of the present disclosure may be implemented in two power supply schemes. FIG. 6 illustrates a direct power supply scheme, and FIG. 7 illustrates a coupling power supply scheme.

The segmented section 233 may be connected to a substrate 222 via the power supply 241 such that it is supplied with power. The substrate 222 may serve to provide ground GND when the segmented section 233 operates as an antenna, and may also provide a path along which electric current flows during supply of power. The substrate 222 for the present embodiment serving as an antenna may be a separate member or may be a main printed circuit board (main PCB).

In the coupling power supply scheme as illustrated in FIG. 7, the segmented section 233 in which coupling occurs may be grounded to the substrate 222 by a ground part 242.

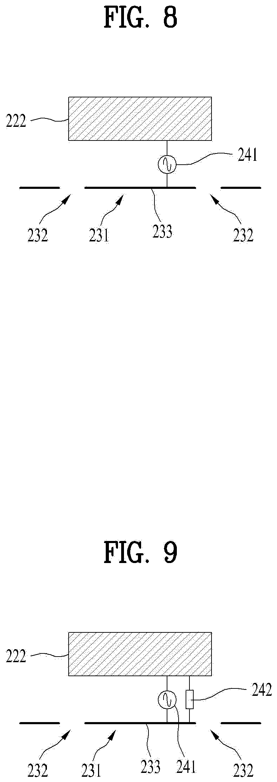

FIGS. 8 to 11 illustrate four configurations according to antenna types of the mobile terminal 100 in accordance with the present disclosure.

An antenna formed using the side frame of a metallic material may be implemented as a monopole antenna, a planar inverted-F antenna (PIFA), a loop antenna, or an open slot antenna, depending on the purpose or application target.

When implemented as a monopole antenna as shown in FIG. 8, the antenna may include a substrate 222, a side frame 231 having a segmented section 233 serving as a radiator, and a power supply 241 connecting the substrate 222 and the side frame 231 to supply power.

When implemented as a PIFA as shown in FIG. 9, the antenna may include a substrate 222, a side frame 231 having a segmented section 233 serving as a radiator, a power supply 241 connecting the substrate 222 and the side frame 231 to supply power, and a ground part 242 connecting and grounding the substrate 222 and the side frame 231.

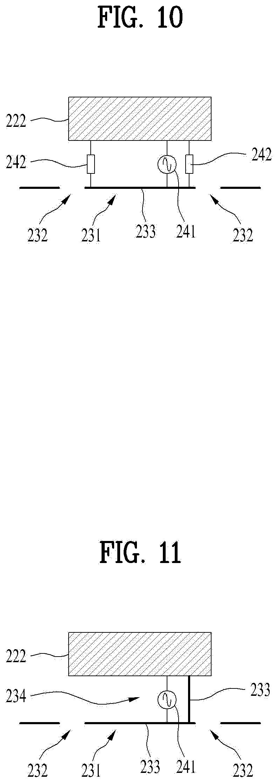

When implemented as a loop antenna as shown in FIG. 10, the antenna may include a substrate 222, a side frame 231 having a segmented section 233 serving as a radiator, a power supply 241 connecting the substrate 222 and the side frame 231 to supply power, and a plurality of ground parts 242 connecting and grounding the substrate 222 and the side frame 231.

When implemented as an open slot antenna as shown in FIG. 11, the antenna may include a substrate 222, a side frame 231 having a unit section serving as a radiator, and a power supply 241 connecting the substrate 222 and the side frame 231 to supply power. Here, the unit section forms an open slot 234 open to one side.

The power supply schemes or antenna types as in the embodiment of FIGS. 6 to 11 may be selectively applied throughout the present disclosure. While FIG. 4 or 5 illustrates a monopole antenna of a direct power supply scheme, embodiments are not limited thereto. A coupling scheme may be implemented as in the embodiment of FIG. 7, or an antenna of FIGS. 9 to 11 may be implemented. Alternatively, these various schemes may be applied to one mobile terminal in combination.

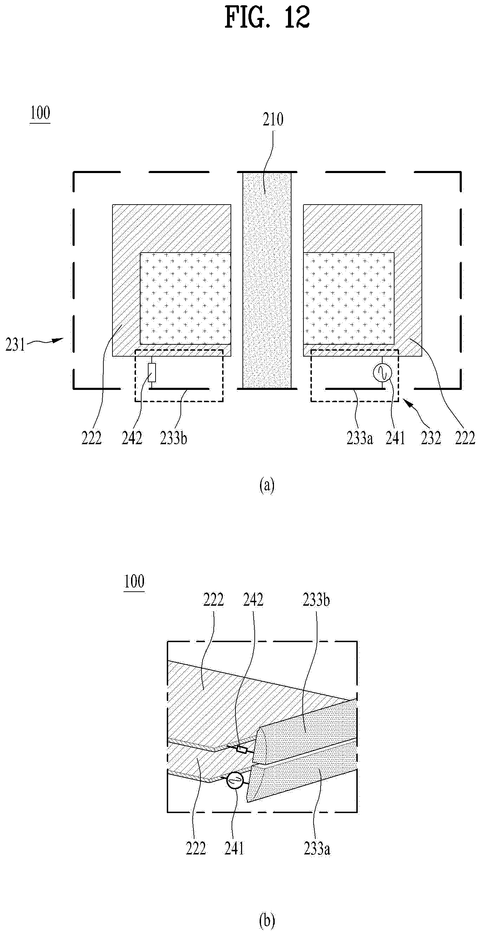

FIG. 12(a shows an unfolded position of an embodiment of a mobile terminal in accordance with the present disclosure, and FIG. 12(b) shows a folded position thereof.

Basically, as described with reference to FIG. 4 or 5, only the first segmented section 233a is supplied with power and operates as an antenna and the second segmented section 233b facing the first segmented section 233a does not operate as an antenna. However, in this embodiment, the second segmented section 233b also operates as part of the antenna.

The second segmented section 233b may be grounded to the substrate 222 through the ground part 242 to serve as a parasitic element. In this case, a wider frequency range may be covered than in the case where only the first segmented section 233a functions as an antenna.

The first segmented section 233a may be connected to the substrate 222 through the power supply 241, and the second segmented section 233b may be connected to the substrate 222 through the ground part 242.

The first segmented section 233a and the second segmented section 233b may be connected to a single substrate 222, or may be connected to neighboring substrates 222 among the separated substrates 222 for simplicity of structure.

Even in this case, similar to the previous embodiments, it is assumed that the lengths of the two segmented sections 233 corresponding to each other are the same and that the sections and the corresponding slits 232 are positioned on the same line.

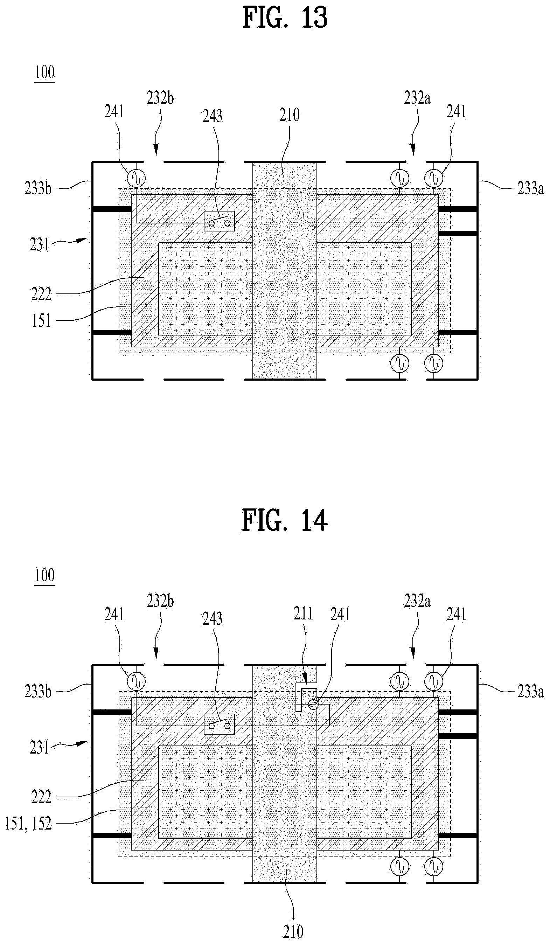

FIG. 13 illustrates an embodiment of the mobile terminal 100 in accordance with the present disclosure.

Unlike the previous embodiments, this embodiment has a feature that both the first segmented section 233a and the second segmented section 233b facing each other are connected to the power supply 241. That is, the second segmented section 233b is also connected to the power supply 241. However, the second segmented section 233b connected to the power supply 241 is deactivated when the mobile terminal 100 is folded.

That is, in the unfolded position of the mobile terminal 100, both the first segmented section 233a and the second segmented section 233b facing each other are supplied with power so as to function as antennas. In the folded position of the mobile terminal 100, the second segmented section 233b connected to the power supply 241 may not function as an antenna as power thereto is interrupted.

A switch 243 may control supply of power to the second segmented section 233b connected to the power supply 241 to carry out the above-described features.

The switch 243 may refer to a physical switch or refer to an area that is in charge of signal control in a circuit area. That is, when a specific member is capable of recognizing unfolding or folding of the mobile terminal 100, the member may recognize a signal of the folding or unfolding to allow the switch 243 to select power supply.

FIG. 14 illustrates another embodiment of the mobile terminal 100 in accordance with the present disclosure.

In the embodiment of FIG. 13, when the mobile terminal 100 is folded, the variable antenna of the second unit section may fail to function. This issue may be addressed by the present embodiment.

When the hinge member 210 is formed of metal, it may be used as an antenna. The hinge member 210 refers to a member that connects the first body 131 and the second body 132 to implement folding or unfolding. When the hinge member 210 is used as an antenna, an area including a corresponding radiation pattern is defined as a hinge member antenna 211.

When the mobile terminal 100 is folded, the hinge member antenna 211 performs the antenna function in place of the second segmented section 233b to which the power supply 241 is connected. The hinge member antenna 211 may be connected to the switch 243 so as to be selectively supplied with power.

In summary, when the mobile terminal 100 is unfolded, the switch 243 allows power to be supplied to the second segmented section 233b to which the power supply 241 is connected. When the mobile terminal 100 is folded, the power supply 241 is controlled to supply power to the hinge member antenna 211. The switch 243 connected to the second segmented section 233b to which the power supply 241 is connected and the switch 243 connected to the hinge member antenna 211 may be provided separately, and one switch 243 may be provided to control the two antennas at the same time.

In this case, when the mobile terminal 100 is unfolded, the second segmented section 233b connected to the power supply 241 is used as an antenna and the hinge member antenna 211 is not used as an antenna. This is because the hinge member antenna 211 cannot properly function due to a display plate 152, which is formed of a metallic material and provided on the rear surface of the display 151, when the mobile terminal 100 is unfolded.

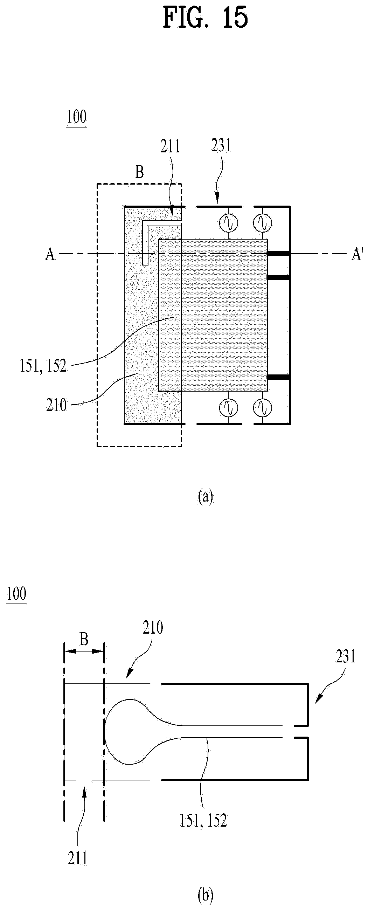

FIG. 15 illustrates an embodiment of the mobile terminal 100 in a folded position in accordance with the present disclosure. FIG. 15(a) illustrates the mobile terminal in the folded position, and FIG. 15(b) illustrates a cross-sectional view taken along line A-A' of FIG. 15(a).

For the reason described above, the hinge member antenna 211 should be arranged in an area that is not shielded by the display plate 152 even when the mobile terminal 100 is folded.

The display 151 and the display plate 152 may be rolled at a gentle curvature near a boundary area, and therefore the conductive area of the hinge member 210 includes an open area B that does not overlap the display plate 152 between the boundary of the display 151 in the folded position and the boundary of the mobile terminal 100. Accordingly, when the antenna radiation pattern is provided in the area B, antenna radiation may be performed without deterioration in radiation performance by the display plate 152.

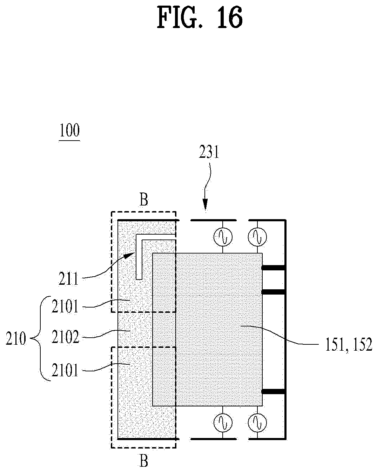

FIG. 16 illustrates another embodiment of the mobile terminal 100 in a folded position in accordance with the present disclosure.

The area B may be formed in various shapes according to the shape of the hinge member 210 and the shape of a conductive area 2101 of the hinge member 210. Unlike the embodiment of FIG. 15, when a non-conductive area 2102 is provide in the central region as shown in FIG. 16, the area B may have segmented "L"' shapes symmetrical to each other.

The hinge member antenna 211 may have various radiation patterns.

The hinge member antenna 211 may be implemented in an open slot pattern having an "L" shape. The open slot pattern may be formed to have a length of λ/4. When necessary, a plurality of open slot patterns may be provided symmetrically.

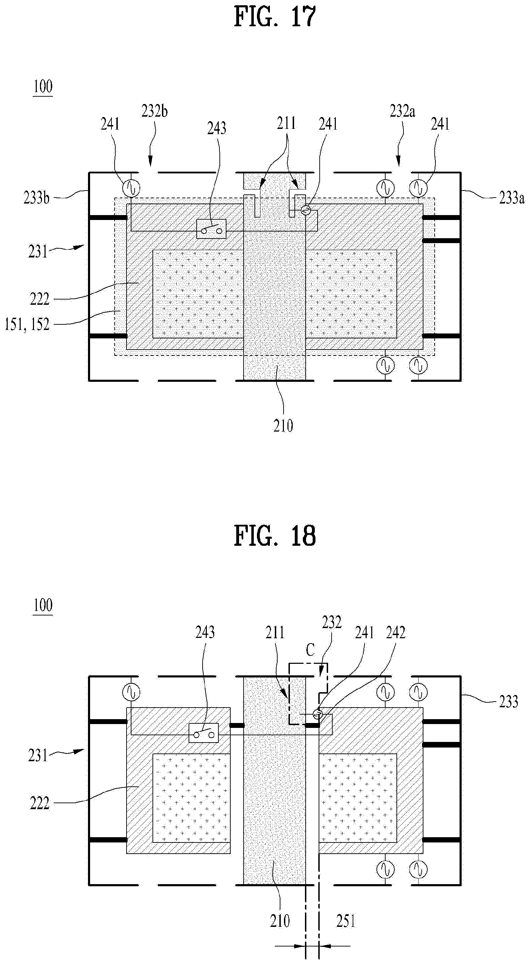

FIG. 17 illustrates one embodiment of the mobile terminal 100 in a folded position in accordance with the present disclosure.

The conductive area 2101 of the hinge member 210 may include an overlapping area that is overlapped when the mobile terminal 100 is folded. In this case, performance of the hinge member antenna 211 may be degraded due to the overlapping conductive area 2101.

To address this issue, the radiation pattern of the hinge member antenna 211 may be formed to overlap with the overlapping area. FIG. 18 illustrates another embodiment of the mobile terminal 100 in accordance with the present disclosure.

An open slot may be formed by providing predetermined spacing between the hinge member 210 and the substrate 222. In this case, an area C of the hinge member 210, which may extend from the boundary of the ground part 242 to an adjacent slit 232, may serve as a radiator.

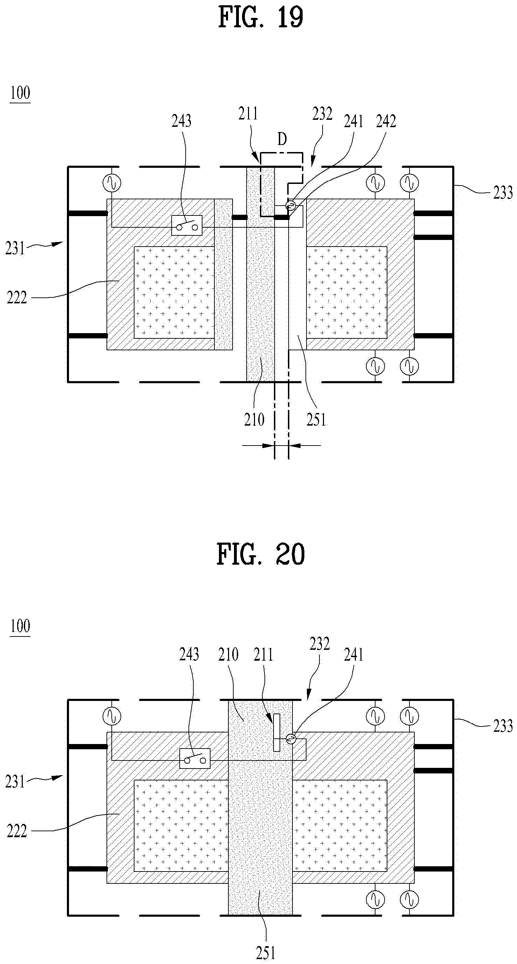

FIG. 19 illustrates another embodiment of the mobile terminal 100 in accordance with the present disclosure.

In another embodiment, the hinge member 210 may form an open slot with an auxiliary metal plate 251 spaced apart from the hinge member 210 by a predetermined distance. The slot is an area D and an antenna formation principle similar to that of the embodiment of FIG. 18 is used. Therefore, redundant descriptions will be omitted.

FIG. 20 illustrates another embodiment of the mobile terminal 100 in accordance with the present disclosure.

The hinge member antenna 211 may serve as an antenna pattern by forming a closed slot in the hinge member 210. The closed slot is provided in an outer area formed by the hinge member 210. Similar to the open slot described above, the closed slot is required to be provided in the area B when the mobile terminal 100 is folded.

However, the closed slot has a length of λ/2, which is twice the length of the open slot described above.

### [Mode for Invention]

It will be apparent to those skilled in the art that the present disclosure can be embodied in other specific forms without departing from the spirit and essential features of the present disclosure.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

### [Industrial Applicability]

The above-described features may be fully or partially applied to mobile terminals or wireless communication devices.

## Claims

1. A foldable mobile terminal composed of a first body and a second body foldable with respect to each other, the mobile terminal comprising:
a side frame defining a side appearance of the mobile terminal in an unfolded position;
a plurality of slits formed in the side frame, the slits partitioning the side frame into a plurality of segmented sections; and
a power supply configured to supply power to at least one first segmented section of the plurality of segmented sections,
wherein, based on a folded position of the first body and the second body, a second segmented section facing the first segmented section has the same length as a length of the first segmented section by the slits.

2. The mobile terminal of claim 1, wherein the power supply supplies power to the first segmented section and blocks power from being supplied to the second segmented section.

3. The mobile terminal of claim 2, wherein the first segmented section is provided to only one of the first body or the second body.

4. The mobile terminal of claim 2, wherein the first segmented section comprises a plurality of first segmented sections,
wherein at least one of the first segmented sections is provided to each of the first body and the second body.

5. The mobile terminal of claim 1, wherein the first segmented section is supplied with power by the power supply, and the second segmented section is grounded and provided with a parasitic element.

6. The mobile terminal of claim 1, wherein the second segmented section is connected to the power supply,
the mobile terminal further comprising a switch configured to cause the power supply to supply power to the second segmented section in the unfolded position and to prevent the power supply from supplying power to the second segmented section in the folded position.

7. The mobile terminal of claim 1, further comprising:
a conductive display plate overlapping the display;
a hinge member comprising a conductive area, the hinge member connecting the first body and the second body to implement the folding or unfolding; and
a hinge member antenna forming a radiation pattern provided in an open area of the conductive area of the hinge member, the open area not overlapping with the display plate in the folded position,
wherein the switch causes the power supply to supply power to the second segmented section in the unfolded position, and causes the power supply to supply power to the hinge member antenna in the folded position.

8. The mobile terminal of claim 7, wherein the conductive area of the hinge member forms an overlapping area when the mobile terminal is in the folded position,
wherein the radiation pattern of the hinge member antenna is formed to overlap the overlapping area.

9. The mobile terminal of claim 7, wherein the radiation pattern is an open slot formed over an outer boundary of the hinge member.

10. The mobile terminal of claim 7, wherein the radiation pattern is a closed slot formed in an inner area of the hinge member.

11. The mobile terminal of claim 1, wherein the power supply is implemented based on one of a direct power supply scheme or a coupling power supply scheme.

12. The mobile terminal to claim 1, wherein the first segmented section is implemented as at least one of a monopole antenna, a planar inverted-F antenna (PIFA), a loop antenna, or an open slot antenna.
